# EUROPÄISCHE PATENTSCHRIFT

(11) **EP 2 605 951 B1**
(45) Veröffentlichungstag und Bekanntmachung des Hinweises auf die Patenterteilung: **18.06.2014**
(21) Anmeldenummer: 11746535.1
(22) Anmeldetag: 18.08.2011
(51) Int. Cl.: B62D 53/08

(54) **LAGERANORDNUNG EINER SATTELKUPPLUNG**
BEARING ASSEMBLY OF A FIFTH WHEEL COUPLING
ARRANGEMENT SUPPORT D'UNE SELLETTE D'ATTELAGE

(30) Priorität: 20.08.2010 DE 102010039578
(43) Veröffentlichungstag der Anmeldung: 26.06.2013
(73) Patentinhaber: Jost-Werke GmbH, 63263 Neu-Isenburg (DE)
(72) Erfinder: ALGÜERA, José, 63739 Aschaffenburg (DE)
(74) Vertreter: Mehler Achler
(86) Internationale Anmeldenummer: PCT/EP2011/064245
(87) Internationale Veröffentlichungsnummer: WO 2012/022789

(56) Entgegenhaltungen:
- WO-A1-01/34454
- DE-A1-102006 007 129

## Beschreibung

Die Erfindung betrifft eine Lageranordnung mit einem Lagerbock einer Sattelkupplung gemäß dem Oberbegriff des Patentanspruchs 1.

Die Sattelkupplungen auf Zugfahrzeugen werden in zwei Lagerböcken schwenkbar gelagert, die auf den beiden parallelen Fahrzeugrahmenelementen des Zugfahrzeugs befestigt sind. Die von dem angekuppelten Auflieger ausgeübten Kräfte mit vertikalen und horizontalen Komponenten werden durch die Sattelkupplung auf die Lagerböcke und von dort in die Rahmenelemente eingeleitet, wobei die Lagerbockbefestigung einer erheblichen Belastung ausgesetzt ist.

Es sind Fahrzeugausführungen bekannt, die mit dem Ziel eines niedrigen Gesamtgewichtes entwickelt wurden, wobei die Lagerböcke der Sattelkupplung direkt an den Rahmenelementen des Fahrzeugs angeschraubt sind und je nach Anwendung durch Traversen miteinander verbunden sind. Die Verschraubung übernimmt die Kraftübertragung der Betriebskräfte der Sattelkupplung in den Fahrzeugrahmen sowohl in vertikaler als auch in und quer zu Fahrtrichtung. Aus diesem Grund ist die Verschraubung entsprechend stark beansprucht. Es müssen daher hochwertige Schrauben in ausreichender Anzahl verwendet werden.

Unterhalb des Lagerbocks sind in der Regel weitere Bauteile oder Chassiskomponenten montiert, wie beispielsweise der Stabilisatorarm der Stabilisatoreinrichtung der Hinterachse des Zugfahrzeugs.

Die EP 1 233 901 B1 beschreibt eine Kupplungsanordnung zum Anbringen an einem Zugfahrzeug, wobei die Lagerböcke einen sich in vertikale Richtung erstreckenden Befestigungsflansch aufweisen, der mit der Außenseite eines vertikalen Abschnitts des jeweiligen Rahmenelemente verbunden ist. Hierbei handelt es sich um eine Schraubverbindung, bei der die Schrauben horizontal angeordnet sind. Die eingebrachten vertikalen Kraftkomponenten wirken als Scherkräfte senkrecht zur Schraubenlängsachse auf die Schrauben ein, die dementsprechend stabil und hochwertig ausgebildet sein müssen.

Aus der EP 0 694 467 A2 sind Lagerböcke bekannt, die ein sich in horizontaler Richtung erstreckenden Befestigungsflansch aufweisen, der mit einem an der Außenseite des vertikalen Abschnitts des Rahmenelementes angeschraubten L-förmigen Hilfsrahmen verbunden ist. Dieser Hilfsrahmen ist ebenfalls mittels einer Schraubverbindung an dem vertikalen Abschnitt des Rahmenelementes befestigt, wobei auf diese Schraubverbindung dieselben Scherkräfte einwirken, wie bei der Anordnung gemäß der EP 1 233 901 B1.

Zur Vermeidung von Scherkräften auf die Schraubverbindung des Befestigungsflansches mit dem horizontalen Schenkel des L-förmigen Hilfsrahmens sind die Bohrungen, die von den Schrauben durchsetzt werden, mit einem derart großen Querschnitt ausgebildet, dass die Schrauben in ihnen mit Übermaß aufgenommen sind. Dadurch soll erreicht werden, dass diese Schraubverbindung lediglich vertikale Zugkräfte aufnehmen muss und somit im Wesentlichen keinen Scherkräften unterliegen. Diese vertikalen Zugkräfte werden allerdings an die Schraubverbindung von Hilfsrahmen und Rahmenelement weitergegeben.

Um gegebenenfalls verhindern zu können, dass die beim Betrieb des Sattelzugfahrzeugs auftretenden Zug- und Schubkräfte als Scherkräfte auf die Schraubverbindung einwirken, können in Fahrtrichtung vor und hinter den Lagerböcken Schubbleche auf die Hilfsrahmenteile aufgeschraubt werden. Diese Schubbleche liegen mit Anschlagflächen an Gegenanschlagflächen des Lagerbocks formschlüssig an, um die von diesen übertragenen Kräften aufnehmen zu können.

Gemäß einer weiteren Ausgestaltung können die Hilfsrahmenteile einstückig mit dem Lagerbock ausgebildet sein.

Es ist Aufgabe der Erfindung, die Schraubverbindung von Lagerbock und Rahmenelement einfach und damit kostengünstig auszugestalten.

Diese Aufgabe wird mit einer Lageranordnung gemäß den Merkmalen des Patentanspruchs 1 gelöst.

Die Lageranordnung ist dadurch gekennzeichnet, dass am vertikalen Abschnitt ein Bauteil befestigt ist, an dem sich der vertikale Befestigungsflansch mindestens in vertikaler Richtung abstützt.

Dadurch, dass eine Abstützung des vertikalen Befestigungsflansches an einem zusätzlichen oder schon vorhandenen Bauteil, das am Rahmenelement des Zugfahrzeuges angeordnet ist, stattfindet, wird die Schraubverbindung von einem Teil der eingeleiteten Kräfte, insbesondere der vertikalen Kräfte, entlastet. Dies hat den Vorteil, dass für die Schraubverbindung keine technisch aufwendigen und hochwertigen Schrauben in großer Anzahl eingesetzt werden müssen. Die Lagerbefestigung, an der sich hinsichtlich des Montageaufwandes nichts geändert hat, kann dadurch kostengünstiger ausgeführt sein. Auch der Lagerbock selbst muss hierfür nicht verändert werden.

Das Bauteil kann vorzugsweise angeschweißt oder angeschraubt sein. Im einfachsten Fall kann das Bauteil eine vertikal angeordnete Platte oder eine Leiste sein, an der sich der vertikale Befestigungsflansch abstützt.

Eine besonders bevorzugte Ausführungsform besteht darin, für die Abstützung ein Bauteil zu verwenden, das ohnehin für einen anderen Einsatzzweck am Rahmenelement befestigt ist. Vorzugsweise ist das Bauelement ein Stabilisatorarms einer Stabilisierungseinrichtung der Fahrzeugachse. Dadurch, dass der Stabilisatorarm im Bereich der Sattelkupplung ebenfalls an dem vertikalen Abschnitt des Rahmenelementes befestigt ist, kann dieser Stabilisatorarm zur Abstützung benutzt werden. Die vertikale Erstreckung von vertikalem Befestigungsflansch und Stabilisatorarm sind aneinander anzupassen, damit die Abstützung erfolgen kann.

Diese Ausführungsform hat den Vorteil, dass kein zusätzliches Bauteil angeordnet werden muss, wodurch das Gesamtgewicht des Zugfahrzeuges reduziert wird.

Eine Verstärkung der Befestigung, insbesondere der Schraubbefestigung des Stabilisatorarms am Rahmenelement ist nicht erforderlich, da die aufgrund des Aufliegergewichts eingeleiteten Vertikalkräfte den von der Achse des Fahrzeugs in den Stabilisatorarm eingeleiteten dynamischen Kräfte entgegengerichtet sind. Insofern heben sich die eingeleiteten Kräfte zumindest teilweise auf.

Vorzugsweise ist das Bauteil unter dem vertikalen Befestigungsflansch an dem vertikalen Abschnitt befestigt.

Die untere Stirnfläche des vertikalen Befestigungsflansches liegt vorzugsweise auf der oberen Stirnfläche des Bauteils an.

Beide an- oder aufeinanderliegenden Stirnflächen können gleich groß oder unterschiedlich groß ausgeführt sein. Befestigungsflansch und Bauteil können in Längsrichtung des Rahmenelementes an derselben Position oder auch versetzt zueinander angeordnet sein. Wenn z. B. das Bauteil eine größere Längserstreckung aufweist als der Befestigungsflansch, kann der Lagerbock in Längsrichtung verschoben werden, wodurch bei einem Sattelzug eine vorgegebene Fahrzeuggesamtlänge realisiert werden kann.

Vorzugsweise weist der vertikale Befestigungsflansch an seiner Außenfläche mindestens einen Horizontalfilansch auf, der an der Stirnfläche des Bauteils ebenfalls anliegt. Ein solcher Horizontalflansch ist vorzugsweise an dem Befestigungsflansch angeformt.

Bei entsprechender Dicke des Bauteils wird die Abstützfläche, d. h. die gemeinsame Kontaktfläche der beiden Stirnflächen, vergrößert. Dadurch eröffnet sich auch die Möglichkeit, eine zusätzliche Verbindung, insbesondere eine Schraubverbindung von Bauteil und vertikalem Befestigungsflansch bzw. Horizontalflansch im Bereich der Stirnflächen vorzusehen.

Der Horizontalflansch ist vorzugsweise am unteren Ende des vertikalen Befestigungsflansches und somit bündig mit der Stirnfläche des Befestigungsflansches angeordnet.

Gemäß einer weiteren Ausführungsform kann der Horizontalflansch auch nach oben versetzt angeordnet sein. In diesem Fall weist die obere Stirnfläche des Bauteils vorzugsweise eine entsprechende Stufe auf. Eine solche Stufe hat den Vorteil, dass eine zusätzliche, insbesondere formschlüssige Fixierung des Lagerbocks in Querrichtung, d. h. senkrecht zur Längsrichtung des Rahmenelementes, erreicht werden kann.

Vorzugsweise weist das Bauteil oder der vertikale Befestigungsflansch eine Aussparung auf, die den vertikalen Befestigungsflansch bzw. das Bauteil mindestens teilweise aufnimmt. Durch die Aussparung werden beidseitig zwei aufragende Schenkel am Bauteil bzw. abragende Schenkel am vertikalen Befestigungsfilansch ausgebildet, so dass auch eine Abstützung des vertikalen Befestigungsflansches bzw. des Bauteils in Fahrtrichtung oder entgegen der Fahrtrichtung, d. h. Längsrichtung des Rahmenelementes, erzielt werden kann.

Vorzugsweise ist die Längserstreckung der Aussparung in Längsrichtung des Rahmenelementes ≥ der Längserstreckung des Befestigungsflansches oder des Bauteils. Dadurch kann eine Verschiebung des Lagerbocks relativ zum Bauteil z. B. zur Einstellung der Gesamtfahrzeuglänge vorgenommen werden.

Vorzugsweise ist der vertikale Befestigungsflansch formschlüssig mit dem Bauteil verbunden. Dadurch können Betriebskräfte in und quer zur Fahrtrichtung aufgenommen werden.

Eine Ausführungsform sieht vor, dass die obere Stirnfläche des Bauteils eine erste Profilierung aufweist und die untere Stirnfläche des Befestigungsflansches eine komplementäre, zweite Profilierung aufweist. Eine solche Profilierung kann beispielsweise durch Vorsprünge, Rippen und/oder Rillen ausgeführt sein.

Diese Profilierung ist insbesondere dann von Vorteil, wenn z. B. die Aussparung größer ist als die jeweils eingesetzte Komponente, d. h. Befestigungsflansch oder Bauteil, und eine Fixierung in Längsrichtung vorgenommen werden soll.

Beispielhafte Ausführungsformen der Erfindung werden nachfolgend anhand der Zeichnungen näher erläutert.

Es zeigen:
- Fig. 1: eine schematische Darstellung der Lageranordnung im Schnitt senkrecht zur Längsrichtung des Rahmenelementes,
- Fig. 2: eine Draufsicht auf die in Fig. 1 dargestellte Ausführungsform,
- Fig. 3: einen Schnitt durch eine Lageranordnung gemäß einer weiteren Ausführungsform,
- Fig. 4: eine Draufsicht auf eine Lageranordnung gemäß einer weiteren Ausführungsform,
- Fig. 5: einen Schnitt durch eine Lageranordnung gemäß einer weiteren Ausführungsform und
- Fig. 6: eine Draufsicht auf eine Lageranordnung gemäß einer weiteren Ausführungsform.

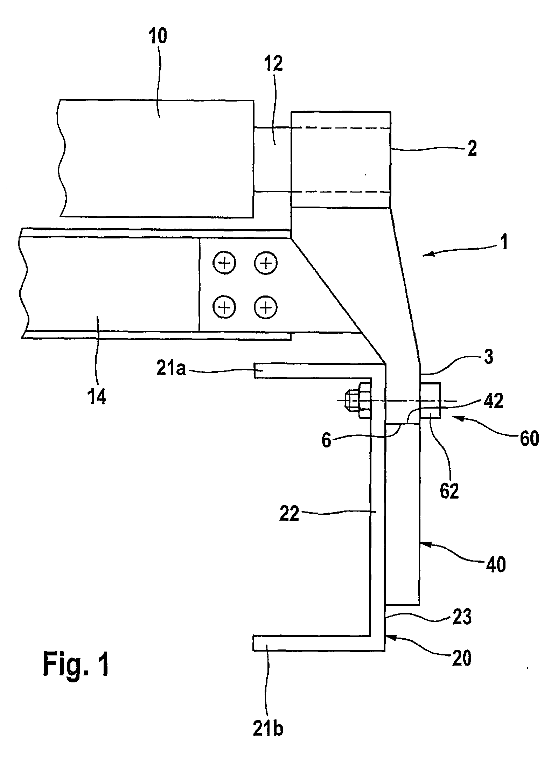

In der Fig. 1 ist eine Lageranordnung in einem Schnitt senkrecht zur Fahrtrichtung, d. h. senkrecht zur Längsrichtung eines Rahmenelementes 20 dargestellt. Das Rahmenelement 20 ist als C-Profil ausgebildet und besitzt zwei horizontale Schenkel 21 a, b sowie einen die Schenkel 21 a, b verbindenden vertikalen Abschnitt 22.

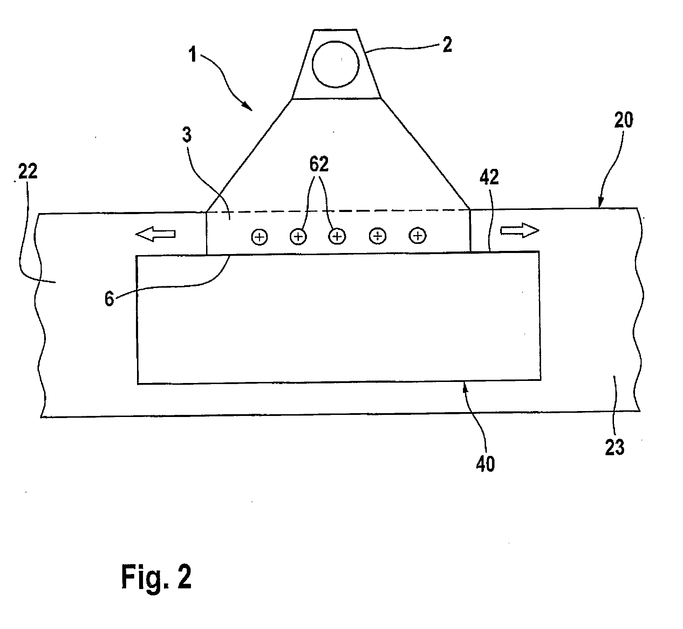

An der Außenseite 23 des vertikalen Abschnitts 22 des Rahmenelementes 20 ist ein Bauteil 40 befestigt, das z. B. - wie in der Fig. 2 dargestellt ist - eine vertikal angeordnete Platte sein kann.

Oberhalb des Rahmenelementes 20 ist ein Lagerbock 1 angeordnet, der am oberen Ende eine Lageraufnahme 2, z. B. in Form einer Lagerhülse, und am unteren Ende einen vertikalen Befestigungsflansch 3 aufweist. In der Lageraufnahme 2 befindet sich ein Lagerbolzen 12 einer nur schematisch und teilweise dargestellten Sattelkupplung 10.

Der vertikale Befestigungsflansch 3 des Lagerbocks 1 ist mittels einer Schraubverbindung 60 mit Schrauben 62 an dem vertikalen Abschnitt 22 des Rahmenelementes 20 befestigt. Der vertikale Befestigungsflansch 3 besitzt eine untere Stirnfläche 6, die auf der oberen Stirnfläche 42 des Bauteils 40 aufliegt. Dadurch stützt sich der vertikale Befestigungsflansch 3 an dem Bauteil 40 ab.

Die von der Sattelkupplung 10 in den Lagerbock 1 eingeleiteten vertikalen Kräfte, werden durch das Bauteil 40 zumindest teilweise aufgenommen, so dass die auf die Schrauben 42 wirkenden Scherkräfte vermindert werden. Es können daher herkömmliche Schrauben 62 eingesetzt werden anstelle von hochwertigen und teuren Spezialschrauben.

Das Rahmenelement 20 ist Bestandteil des Fahrzeugrahmens oder Chassis und auf der gegenüberliegenden Seite des Fahrzeugs ebenfalls vorhanden. Da die Sattelkupplung 16 auf beiden Seiten in einem solchen Lagerbock 1 schwenkbar gelagert ist, befindet sich dieselbe Lageranordnung auch auf der gegenüberliegenden Seite (nicht dargestellt). Die beiden Lagerböcke 1 sind zusätzlich durch eine Quertraverse 14 miteinander verbunden.

In der Fig. 2 ist eine Draufsicht auf die in Fig. 1 gezeigten Lageranordnung dargestellt. Das Bauteil 40 ist als Platte ausgebildet, wobei die Längserstreckung des Bauteils 40 größer ist als die Längserstreckung des Lagerbocks 1 bzw. dessen vertikalen Befestigungsflansches 3. Es ist dadurch möglich, den Lagerbock 1 in den beiden Pfeilrichtungen zu verschieben und am Rahmenelement 20 in einer gewünschten Position zu befestigen, wobei die Abstützung auf dem Bauteil 40 in den verschiedenen Positionen gewährleistet wird. Die obere Stirnfläche 42 ist in dieser Ausführungsform größer als die untere Stirnfläche 6 des vertikalen Befestigungsflansches 3.

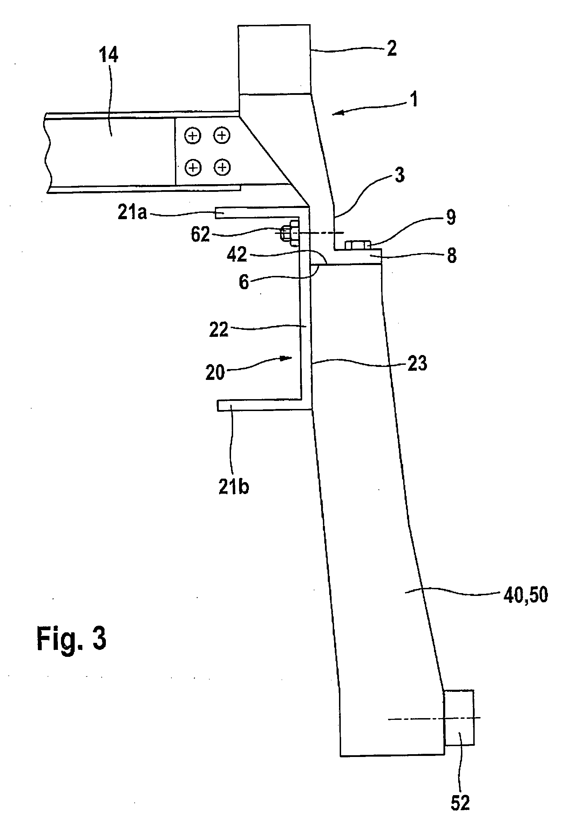

In der Fig. 3 ist eine weitere Ausführungsform dargestellt. Während das Bauteil 40 in den Fig. 1 und 2 ein zusätzlich anzubringendes Bauteil sein kann, das beispielsweise angeschweißt oder angeschraubt sein kann, ist das in der Fig. 3 gezeigte Bauteil 40 ein Stabilisatorarm 50 einer Stabilisierungseinrichtung der Fahrzeugachse (nicht dargestellt). Am unteren Ende des Stabilisatorarms 50 ist schwenkbar ein Lenker 52 angeordnet. Weitere Details der Stabilisierungseinrichtung sind nicht dargestellt.

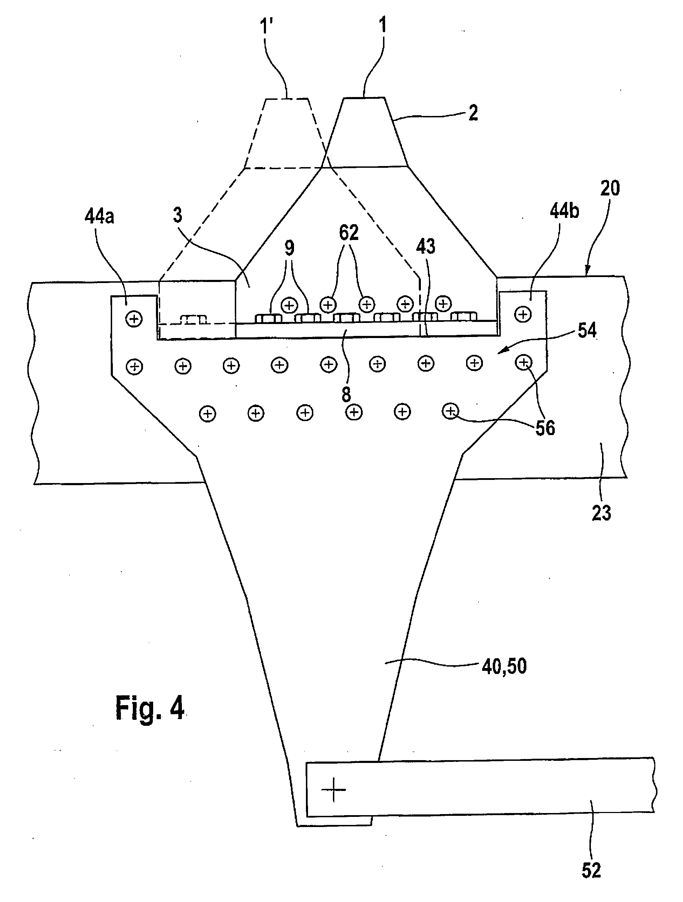

Der Stabilisatorarm 50 ist, wie beispielsweise in Fig. 4 dargestellt ist, mittels einer Schraubverbindung 54 mit Schrauben 56 an der Außenseite 23 des vertikalen Abschnitts 22 des Rahmenelementes 20 befestigt.

Wie in Fig. 3 dargestellt ist, ist der Stabilisatorarm 50 dicker ausgebildet als der vertikale Befestigungsflansch 3. Dieser weist einen Horizontalflansch 8 am unteren Ende auf, der an die Dicke des Stabilisatorarms 50 angepasst ist. Dadurch wird die untere Stirnfläche 6 des Befestigungsflansches 3 vergrößert und an die obere Stirnfläche 42 des Bauteils 40 bzw. des Stabilisatorarms 50 angepasst. Dies ermöglicht eine zusätzliche Verbindung von Befestigungsflansch 3 und Stabilisatorarm 50 mittels der senkrecht angeordneten Schrauben 9, die am Horizontalflansch 8 angreifen.

In der Fig. 4 ist eine weitere Ausführungsform dargestellt, in der der Stabilisatorarm 50 eine Aussparung 43 aufweist. Diese Aussparung befindet sich am oberen Ende des Stabilisatorarms, wodurch eine U-förmige Ausgestaltung geschaffen wird, bei der zwei aufragende Schenkel 44a und 44b die Aussparung 43 begrenzen. In der hier gezeigten Ausführungsform ist die Längserstreckung der Aussparung größer als die Längserstreckung des vertikalen Befestigungsflansches 30, so dass der Lagerbock an verschiedenen Positionen innerhalb der Aussparung 43 positioniert werden kann. Eine weitere Position des Lagerbocks ist durch die gestrichelt eingezeichnete Ausführungsform 1' angedeutet. Die beiden Lagerböcke 1 bzw. 1' liegen entweder an dem Schenkel 44a oder dem Schenkel 44b an, wodurch eine zusätzliche Abstützung in Fahrtrichtung bzw. entgegen der Fahrtrichtung realisiert wird.

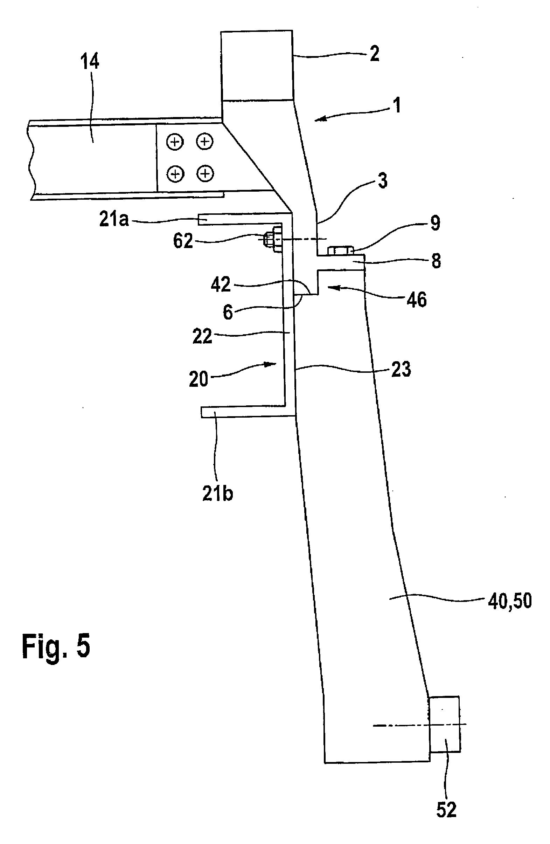

In der Fig. 5 ist eine weitere Ausführungsform dargestellt, bei der der Horizontalflansch 8 gegenüber der unteren Stirnfläche 6 des Befestigungs-flansches 3 nach oben versetzt angeordnet ist. Auch hier ist eine zusätzliche Fixierung mittels der Schrauben 9 vorgesehen. Aufgrund dieses Versatzes des Horizontalflansches 8 weist die obere Stirnfläche 42 des Stabilisatorarms 50 eine Stufe 46 auf. Die obere Stirnfläche 42 besitzt zwei Flächenabschnitte in verschiedenen Ebenen, wodurch die Stufe 46 gebildet wird. Der untere Abschnitt des Befestigungsflansches 3 liegt somit zwischen der Stufe 46 und der Außenseite 23 des vertikalen Abschnitts 22 des Rahmenelementes 20, wodurch eine Fixierung in Querrichtung, d. h. in Richtung senkrecht zur Längserstreckung des Rahmenelementes 20 erreicht wird.

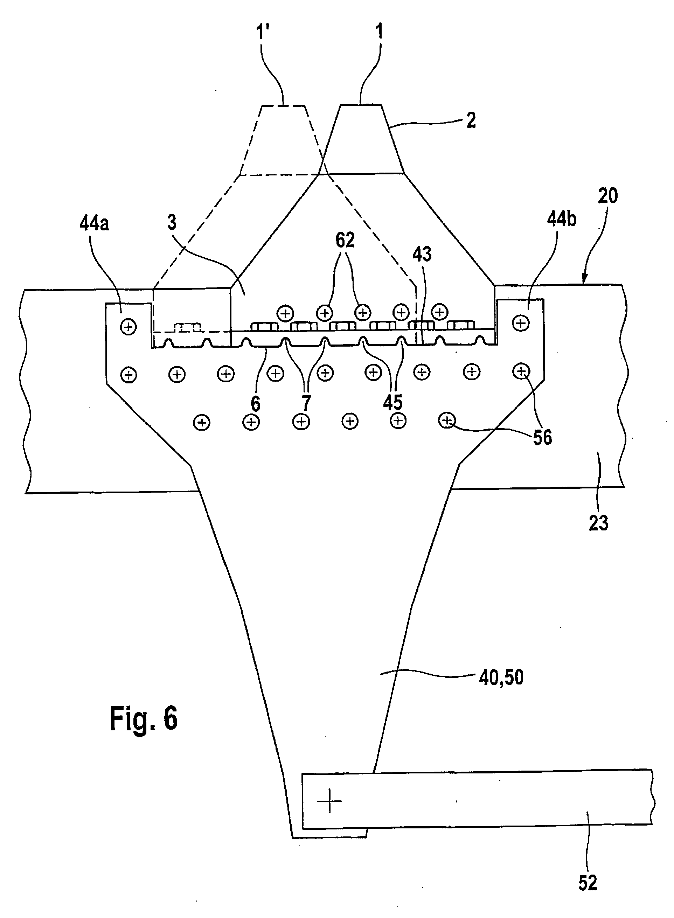

In der Fig. 6 ist eine weitere Ausführungsform dargestellt, die der Ausführungsform in Fig. 4 entspricht, wobei die obere Stirnfläche 42 im Bereich der Ausnehmung 43 des Stabilisatorarms 50 eine erste Profilierung aufweist. Diese erste Profilierung besteht in beabstandet angeordneten nach oben aufragenden Rippen 45, die formschlüssig in entsprechende Ausnehmungen 7 an der unteren Stirnfläche 6 des vertikalen Befestigungsflansches 3 eingreifen. Wenn der Lagerbock 1 keinen Kontakt mit den Schenkeln 44a bzw. 44b hat, wird eine Fixierung in Fahrtrichtung bzw. entgegen der Fahrtrichtung durch das Ineinandergreifen der beiden Profilierungen erreicht. Solche Profilierungen der Stirnflächen können auch bei der in Fig. 2 dargestellten Ausführungsform vorgesehen sein.

### Bezugszeichenliste

- 1, 1: Lagerbock
- 2: Lageraufnahme
- 3: Befestigungsflansch
- 6: untere Stirnfläche
- 7: Ausnehmung
- 8: Horizontalflansch
- 9: Schraube

- 10: Sattelkupplung
- 12: Lagerbolzen
- 14: Quertraverse

- 20: Rahmenelement
- 21a, b: Schenkel
- 22: vertikaler Abschnitt
- 23: Außenseite

- 40: Bauteil
- 42: obere Stirnfläche
- 43: Aussparung
- 44a, b: aufragender Schenkel
- 45: Rippe
- 46: Stufe

- 50: Stabilisatorarm
- 52: Lenker
- 54: Schraubverbindung
- 56: Schraube

- 60: Schraubverbindung
- 62: Schraube

## Patentansprüche

1. Lageranordnung mit einem Lagerbock (1, 1') einer Sattelkupplung (16), der mindestens einen vertikalen Befestigungsflansch (3) aufweist,
mit einem Rahmenelement (20) eines Zugfahrzeuges, wobei das Rahmenelement (20) einen vertikalen Abschnitt (22) aufweist und
mit einer Schraubverbindung (60), mit der der vertikale Befestigungsflansch (3) mit einer Außenseite (23) des vertikalen Abschnitts (22) verbunden ist, **dadurch gekennzeichnet,**
**dass** am vertikalen Abschnitt (22) ein Bauteil (40) befestigt ist, an dem sich der vertikale Befestigungsflansch (3) mindestens in vertikaler Richtung abstützt.

2. Lageranordnung nach Anspruch 1, **dadurch gekennzeichnet, dass** das Bauteil (40) unter dem vertikalen Befestigungsflansch (3) an dem vertikalen Abschnitt (22) befestigt ist.

3. Lageranordnung nach Anspruch 1 und 2, **dadurch gekennzeichnet, dass** eine untere Stirnfläche (6) des vertikalen Befestigungsflansches (3) auf einer oberen Stirnfläche (42) des Bauteils (40) anliegt.

4. Lageranordnung nach einem der Ansprüche 1 bis 3, **dadurch gekennzeichnet, dass** der vertikale Befestigungsflansch (3) an einer Außenfläche (4) mindestens einen Horizontalflansch (8) aufweist, der an einer oberen Stirnfläche (42) des Bauteils (40) anliegt.

5. Lageranordnung nach Anspruch 4, **dadurch gekennzeichnet, dass** der Horizontalflansch (8) beabstandet zur Stirnfläche (6) des vertikalen Befestigungsflansches (3) angeordnet ist.

6. Lageranordnung nach einem der Ansprüche 1 bis 5, **dadurch gekennzeichnet, dass** das Bauteil (40) an seiner Stirnfläche (42) eine Stufe (46) aufweist.

7. Lageranordnung nach einem der Ansprüche 5 oder 6, **dadurch gekennzeichnet, dass** der vertikale Befestigungsflansch (3) mit dem Bauteil (40) verbunden ist.

8. Lageranordnung nach einem der Ansprüche 1 bis 7, **dadurch gekennzeichnet, dass** das Bauteil (40) oder der vertikale Befestigungsflansch (3) eine Aussparung (43) aufweist, die den vertikalen Befestigungsflansch (3) oder das Bauteil (40) mindestens teilweise aufnimmt.

9. Lageranordnung nach einem der Ansprüche 1 bis 8, **dadurch gekennzeichnet, dass** die Längserstreckung der Aussparung (43) in Längsrichtung des Rahmenelementes ≥ der Längserstreckung des Befestigungsflansches (3) oder des Bauteils (40) ist.

10. Lageranordnung nach einem der Ansprüche 1 bis 9, **dadurch gekennzeichnet, dass** der vertikale Befestigungsflansch (3) und das Bauteil (40) formschlüssig miteinander verbunden sind.

11. Lageranordnung nach einem der Ansprüche 1 bis 10, **dadurch gekennzeichnet, dass** die obere Stirnfläche (42) des Bauteils (40) eine erste Profilierung aufweist und
dass die untere Stirnfläche (6) des Befestigungsflansches (3) eine komplementäre zweite Profilierung aufweist.

12. Lageranordnung nach einem der Ansprüche 1 bis 11, **dadurch gekennzeichnet, dass** das Bauteil (40) ein Stabilisatorarm (50) ist.

## Claims

1. Bearing arrangement having a bearing block (1, 1') of a fifth wheel (16), which bearing block has at least one vertical fixing flange (3),
having a frame element (20) of a traction vehicle, the frame element (20) having a vertical portion (22) and
having a screw connection (60), with which the vertical fixing flange (3) is connected to an outer side (23) of the vertical portion (22), **characterised in that**
there is fixed to the vertical portion (22) a component (40) on which the vertical fixing flange (3) is supported at least in the vertical direction.

2. Bearing arrangement according to claim 1, **characterised in that** the component (40) is fixed to the vertical portion (22) under the vertical fixing flange (3).

3. Bearing arrangement according to claim 1 and 2, **characterised in that** a lower end face (6) of the vertical fixing flange (3) adjoins an upper end face (42) of the component (40).

4. Bearing arrangement according to any one of claims 1 to 3, **characterised in that** the vertical fixing flange (3) has on an outer face (4) at least one horizontal flange (8) which adjoins an upper end face (42) of the component (40).

5. Bearing arrangement according to claim 4, **characterised in that** the horizontal flange (8) is arranged with spacing from the end face (6) of the vertical fixing flange (3).

6. Bearing arrangement according to any one of claims 1 to 5, **characterised in that** the component (40) has a step (46) on the end face (42) thereof.

7. Bearing arrangement according to either claim 5 or 6, **characterised in that** the vertical fixing flange (3) is connected to the component (40).

8. Bearing arrangement according to any one of claims 1 to 7, **characterised in that** the component (40) or the vertical fixing flange (3) has a recess (43) which receives the vertical fixing flange (3) or the component (40) at least partially.

9. Bearing arrangement according to any one of claims 1 to 8, **characterised in that** the longitudinal extent of the recess (43) in the longitudinal direction of the frame element ≥ the longitudinal extent of the fixing flange (3) or the component (40).

10. Bearing arrangement according to any one of claims 1 to 9, **characterised in that** the vertical fixing flange (3) and the component (40) are connected to each other in a positive-locking manner.

11. Bearing arrangement according to any one of claims 1 to 10, **characterised in that** the upper end face (42) of the component (40) has a first profiling and
**in that** the lower end face (6) of the fixing flange (3) has a complementary second profiling.

12. Bearing arrangement according to any one of claims 1 to 11, **characterised in that** the component (40) is a stabilise arm (50).

## Revendications

1. Agencement de montage incluant un support de palier (1, 1') d'une sellette d'attelage (16) muni d'au moins une aile verticale de fixation (3), comprenant
un élément (20) du cadre d'un véhicule tracteur, ledit élément (20) dudit cadre présentant une région verticale (22), et
une solidarisation boulonnée (60) par laquelle ladite aile verticale de fixation (3) est reliée à une face extérieure (23) de ladite région verticale (22), **caractérisé par le fait**
**qu'**une pièce structurelle (40), contre laquelle l'aile verticale de fixation (3) est en appui au moins dans le sens vertical, est fixée à la région verticale (22).

2. Agencement de montage selon la revendication 1, **caractérisé par le fait que** la pièce structurelle (40) est fixée à la région verticale (22) au-dessous de l'aile verticale de fixation (3).

3. Agencement de montage selon les revendications 1 et 2, **caractérisé par le fait qu'**une face extrême inférieure (6) de l'aile verticale de fixation (3) est en applique contre une face extrême supérieure (42) de la pièce structurelle (40).

4. Agencement de montage selon l'une des revendications 1 à 3, **caractérisé par le fait que** l'aile verticale de fixation (3) est pourvue, sur une surface extérieure (4), d'au moins une bride horizontale (8) en applique contre une face extrême supérieure (42) de la pièce structurelle (40).

5. Agencement de montage selon la revendication 4, **caractérisé par le fait que** la bride horizontale (8) est située à distance de la face extrême (6) de l'aile verticale de fixation (3).

6. Agencement de montage selon l'une des revendications 1 à 5, **caractérisé par le fait que** la pièce structurelle (40) comporte un gradin (46) à sa face extrême (42).

7. Agencement de montage selon l'une des revendications 5 ou 6, **caractérisé par le fait que** l'aile verticale de fixation (3) est reliée à la pièce structurelle (40).

8. Agencement de montage selon l'une des revendications 1 à 7, **caractérisé par le fait que** la pièce structurelle (40) ou l'aile verticale de fixation (3) comporte une dépouille (43) recevant, au moins en partie, ladite aile verticale de fixation (3) ou ladite pièce structurelle (40).

9. Agencement de montage selon l'une des revendications 1 à 8, **caractérisé par le fait que** l'étendue longitudinale de la dépouille (43) est ≥ à l'étendue longitudinale de l'aile de fixation (3) ou de la pièce structurelle (40) dans le sens longitudinal de l'élément du cadre.

10. Agencement de montage selon l'une des revendications 1 à 9, **caractérisé par le fait que** l'aile verticale de fixation (3) et la pièce structurelle (40) sont reliées l'une à l'autre par complémentarité de formes.

11. Agencement de montage selon l'une des revendications 1 à 10, **caractérisé par le fait que** la face extrême supérieure (42) de la pièce structurelle (40) présente un premier profilage ; et
que la face extrême inférieure (6) de l'aile de fixation (3) présente un second profilage concordant.

12. Agencement de montage selon l'une des revendications 1 à 11, **caractérisé par le fait que** la pièce structurelle (40) est un bras stabilisateur (50).
